# FASCICULE DE BREVET EUROPEEN

(11) **EP 3 200 422 B1**
(45) Date de publication et mention de la délivrance du brevet: **23.09.2020**
(21) Numéro de dépôt: 17153436.5
(22) Date de dépôt: 27.01.2017
(51) Int. Cl.: H04W 12/08, H04L 29/06, H04W 8/18, G06F 21/77, H04W 88/06, H04W 4/12

(54) **PROCÉDÉ DE SURVEILLANCE DU CHANGEMENT DE PROFIL D'UN TERMINAL MOBILE DE TÉLÉCOMMUNICATION**
ÜBERWACHUNGSVERFAHREN EINE KOMMUNIKATIONPROFILÄNDERUNG EINES MOBILEN TELEKOMMUNIKATIONSENDGERÄTS
METHOD FOR MONITORING THE PROFIL CHANGES OF A MOBILE TELECOMMUNICATION TERMINAL

(30) Priorité: 29.01.2016 FR 1650754
(43) Date de publication de la demande: 02.08.2017
(73) Titulaire: Idemia Identity & Security France, 92400 Courbevoie (FR)
(72) Inventeur: UGLIETTI, Gianni, 92400 COURBEVOIE (FR)
(74) Mandataire: Lavaud, Thomas

(56) Documents cités:
- DE-A1-102010 044 687
- FR-A1- 3 021 181
- US-A1- 2015 289 137
- GSM ASSOCIATION: "Embedded SIM Task Force Requirements and Use Cases 1.0", NON-CONFIDENTIAL WHITE PAPER, 21 février 2011 (2011-02-21), XP055180476,

## Description

### ARRIERE PLAN DE L'INVENTION

Le déploiement attendu des cartes eUICC (pour « embedded Universal Integrated Circuit Card »), aussi appelées eSIM (pour « embedded Subscriber Identity Module »), pour tout type de terminal mobile de télécommunication fournissant des accès à des réseaux téléphoniques (notamment dans des téléphones mobiles, des smartphones, des tablettes), impliquera un certain nombre de changements dans la manière dont les utilisateurs gèrent leurs abonnements à des services fournis par des opérateurs téléphoniques.

Aujourd'hui, lorsqu'un utilisateur d'un terminal mobile de télécommunication choisit un abonnement à un service fourni par un opérateur téléphonique, il achète une carte SIM traditionnelle puis insère la carte SIM traditionnelle dans le terminal mobile de télécommunication pour bénéficier du service. Lorsque l'utilisateur décide de changer d'opérateur téléphonique, il retire la carte SIM puis la détruit ou la jette, et il se procure une nouvelle carte SIM.

Un utilisateur d'un terminal mobile de télécommunication équipé d'une carte eSIM choisissant un abonnement à un service fourni par un opérateur téléphonique chargera quant à lui un profil d'abonnement associé à l'opérateur téléphonique puis activera le profil d'abonnement. Lorsque l'utilisateur décidera de changer d'opérateur téléphonique, il désactivera le profil d'abonnement actif et le supprimera, puis il chargera et activera un nouveau profil d'abonnement. Ces opérations seront effectuées via une interface utilisateur du terminal mobile de télécommunication.

Ainsi, grâce à la carte eSIM, l'utilisateur pourra charger plusieurs profils d'abonnement pour plusieurs opérateurs téléphoniques différents, sélectionner et activer l'un des profils d'abonnement, et échanger le profil d'abonnement actif contre l'un des autres profils d'abonnement chargés dans la carte eSIM.

L'utilisation des cartes eSIM présente un certain nombre de risques liés à l'exécution d'applications malveillantes dans le terminal mobile de télécommunication.

Ainsi, certaines applications malveillantes visent à échanger le profil d'abonnement actif contre un nouveau profil d'abonnement, à l'insu de l'utilisateur.

Parmi les risques pour l'utilisateur de ce type d'applications malveillantes, on trouve notamment un risque d'augmentation importante des frais d'abonnement, dans le cas où le nouveau profil d'abonnement est associé à un tarif plus important, ainsi qu'un risque de déni de service. Le risque de déni de service résulte ici de l'exécution d'une boucle infinie d'échanges de profils d'abonnement.

Parmi les risques pour l'opérateur téléphonique de ce type d'applications malveillantes, on trouve notamment un risque de désintermédiation, dans le cas où une application malveillante serait, « en temps réel », capable de choisir à la place de l'utilisateur le profil d'abonnement le plus rentable parmi les profils d'abonnement disponibles. On trouve aussi des risques associés à des problématiques de responsabilité, d'image de marque, ainsi, bien sûr, que des risques de pertes de clients et de revenus. Le document US 2015/289137 A1 (YANG XIANGYING [US] ET AL) du 8 octobre 2015 décrit la limitation de la fréquence de changement de profils d'abonnement dans une carte eSIM.

Un certain nombre de crédits pour autoriser ces changements sont alloués par un opérateur à chaque authentification ou connexion au réseau.

Le temps séparant ces changements est mesuré grâce à l'horloge du circuit sécurisé par opposition à l'horloge logicielle).

Le document DE 10 2010 044687 A1 (GIESECKE & DEVRIENT GMBH [DE]) 8 mars 2012 (2012-03-08) décrit l'utilisation de compteurs des différentes erreurs sur un processeur de carte à puce sécurisé.

Les différents compteurs peuvent être incrémentés ou décrémentés de façon équivalente.

Les limites avant l'avertissement de l'utilisateur ou le blocage de la carte sont adaptées par la carte elle même en fonction de son histoire et de valeurs de capteurs (par exemple, de déplacements).

Le document GSM ASSOCIATION: "Embedded SIM Task Force Requirements and Use Cases 1.0",NONCONFIDENTIAL WHITE PAPER, 21 février 2011 (2011-02-21),XP05518047 décrit différents usages d'un UICC ou le profil est changé.

Ce document recommande d'avertir l'utilisateur de ces changements (ou les demander).

L'opérateur et l'utilisateur contrôlent les changements de profils pour éviter les attaques de type Déni de Service.

### OBJET DE L'INVENTION

L'invention a pour objet de réduire les risques évoqués ci-dessus.

### RESUME DE L'INVENTION

L'invention est défini dans la revendication indépendante 1. Des exemples de mise en œuvre sont décrits dans les revendications dépendantes.

En vue de la réalisation de ce but, on propose un procédé de surveillance d'un terminal mobile de télécommunication muni d'un circuit intégré de type carte eUICC ou eSIM, une pluralité de profils d'abonnement étant stockée dans le circuit intégré, le procédé de surveillance comportant les étapes de :
- incrémenter un compteur à chaque fois qu'un ordre de changement de profil d'abonnement est reçu ;
- déterminer un nombre d'ordres de changement de profil d'abonnement reçus au cours d'une durée prédéterminée ;
- si le nombre d'ordres de changement de profil d'abonnement reçus au cours de la durée prédéterminée est supérieur à un seuil prédéterminé, en déduire un fonctionnement suspect du terminal mobile de télécommunication. La durée prédéterminée et le seuil prédéterminé étant configurables par l'utilisateur.

Le procédé de surveillance de l'invention déduit donc un fonctionnement suspect d'un nombre d'ordres de changement de profil d'abonnement trop important survenant au cours d'une durée prédéterminée. Le procédé de surveillance de l'invention permet ainsi de détecter l'exécution d'une application malveillante qui échange de manière fréquente et à l'insu d'un utilisateur du terminal mobile de télécommunication le profil d'abonnement actif du terminal mobile de télécommunication.

D'autres caractéristiques et avantages de l'invention ressortiront à la lecture de la description qui suit d'un mode de réalisation particulier, non limitatif de l'invention.

### DESCRIPTION DETAILLEE DE L'INVENTION

Le procédé de surveillance de l'invention est ici mis en œuvre pour surveiller un téléphone mobile équipé d'une carte eSIM positionnée à l'intérieur du téléphone mobile.

La carte eSIM du téléphone mobile comporte un module de mémoire et un microcontrôleur.

Le module de mémoire de la carte eSIM comprend une mémoire ROM, une mémoire EEPROM ou FLASH et une mémoire RAM. Une pluralité de profils d'abonnement, qui correspond à une pluralité d'opérateurs téléphoniques différents et qui est associée à un utilisateur du téléphone mobile, a été chargée et est stockée dans le module de mémoire de la carte eSIM.

Le microcontrôleur de la carte eSIM pilote le procédé de surveillance de l'invention en exécutant un programme du système d'exploitation de la carte eSIM. Ce programme est stocké dans le module de mémoire de la carte eSIM.

Un compteur est exécuté dans le microcontrôleur de la carte eSIM. Le compteur est initialisé à zéro lors d'une initialisation de la carte eSIM. Puis, à chaque fois qu'un ordre de changement de profil d'abonnement est reçu par le microcontrôleur de la carte eSIM, le compteur est incrémenté.

Lorsqu'un premier ordre de changement de profil d'abonnement est reçu suite à l'initialisation de la carte eSIM, un chronomètre dédié à la mise en œuvre du procédé de surveillance de l'invention démarre.

Le chronomètre est réalisé grâce à un timer inclus dans un microcontrôleur d'une carte électrique du téléphone mobile. Cette carte électrique est distincte de la carte eSIM. Le chronomètre est piloté par le microcontrôleur de la carte eSIM grâce à un ensemble de commandes programmées et stockées dans le module de mémoire de la carte eSIM. L'ensemble de commandes programmées réalise notamment une interface entre la carte eSIM et la carte électrique distincte et permet à la carte eSIM de piloter la carte électrique distincte pour mettre en œuvre un ensemble de fonctions prédéfinies (parmi lesquelles le pilotage du chronomètre). L'ensemble de commandes programmées dans la carte eSIM forme un kit d'outil STK (ou « SIM Application Toolkit »).

Lorsqu'il a démarré, le chronomètre mesure une certaine durée prédéterminée. Au cours de la durée prédéterminée, la carte eSIM utilise le compteur pour déterminer un nombre d'ordres de changement de profil d'abonnement reçus (incluant le premier ordre de changement de profil d'abonnement).

A l'issue de la durée prédéterminée, si le nombre d'ordres de changement de profil d'abonnement reçus au cours de la durée prédéterminée est inférieur ou égal à un seuil prédéterminé, la carte eSIM considère que le téléphone mobile fonctionne normalement. Les ordres de changement de profil d'abonnement sont exécutés par la carte eSIM. Le compteur et le chronomètre sont réinitialisés.

A l'issue de la durée prédéterminée, si le nombre d'ordres de changement de profil d'abonnement reçus au cours de la durée prédéterminée est supérieur au seuil prédéterminé, la carte eSIM déduit du nombre d'ordres de changement de profil d'abonnement un fonctionnement suspect du téléphone mobile.

L'ordre de changement de profil d'abonnement suivant la détection du fonctionnement suspect n'est pas exécuté immédiatement.

La carte eSIM commande l'affichage d'une fenêtre intruse (ou fenêtre « pop-up ») sur un écran du téléphone mobile, qui envoie un message d'alerte à l'utilisateur du téléphone mobile. Le message d'alerte requiert notamment une confirmation de l'utilisateur avant d'exécuter l'ordre de changement de profil d'abonnement suivant la détection du fonctionnement suspect.

Si l'utilisateur confirme que cet ordre de changement de profil d'abonnement a bien été émis par lui-même de manière volontaire, l'ordre de changement de profil d'abonnement est exécuté et le compteur et le chronomètre sont réinitialisés.

Sinon, l'ordre de changement de profil d'abonnement n'est pas exécuté. Le compteur et le chronomètre sont réinitialisés.

Avantageusement, la carte eSIM commande alors une action parmi les actions suivantes : désactivation totale ou partielle du téléphone mobile, suppression de l'application malveillante, recherche de l'origine de l'installation de l'application malveillante, affichage de consignes à l'utilisateur pour corriger le fonctionnement suspect, remontée d'un message d'information à un ou plusieurs opérateurs téléphoniques.

On note que la durée prédéterminée au cours de laquelle le nombre d'ordres de changement de profil d'abonnement est déterminé pour détecter un fonctionnement suspect du téléphone mobile, et le seuil prédéterminé avec lequel le nombre d'ordres de changement de profil d'abonnement est comparé, sont configurables par l'utilisateur du téléphone mobile. On rend ainsi flexible la détection du fonctionnement suspect qui peut être adaptée par l'utilisateur à son utilisation du téléphone mobile et à sa gestion des abonnements.

L'invention n'est pas limitée au mode de réalisation particulier qui vient d'être décrit, mais, bien au contraire, couvre toute variante entrant dans le cadre de l'invention tel que défini par les revendications.

On a indiqué que le procédé de surveillance de l'invention est piloté via l'exécution d'un programme du système d'exploitation de la carte eSIM. Ce programme pourrait aussi être inclus dans une « applet » exécutée par le microcontrôleur de la carte eSIM.

La carte eSIM est ici insérée ou intégrée dans un téléphone mobile. Cependant, l'invention s'applique bien sûr à d'autres terminaux mobiles de télécommunication : tablette, smartphone, montre connectée, etc.

L'invention s'applique aussi bien sûr à tout type de circuit intégré amovible et inamovible différent de type eUICC, et pas uniquement aux cartes eSIM (par exemple, aux cartes de type USIM inamovibles et intégrées).

## Revendications

1. Procédé de surveillance d'un terminal mobile de télécommunication muni d'un circuit intégré de type carte eUICC ou eSIM, une pluralité de profils d'abonnement étant stockée dans le circuit intégré, le procédé de surveillance comportant les étapes de :
- lorsqu'un premier ordre de changement de profil d'abonnement est reçu suite à l'initialisation du circuit intégré de type carte eUICC ou eSIM, démarrer un chronomètre ;
- mesurer une durée prédéterminée grâce au chronomètre ;
- incrémenter un compteur à chaque fois qu'un nouvel ordre de changement de profil d'abonnement est reçu ;
- déterminer un nombre d'ordres de changement de profil d'abonnement reçus au cours de la durée prédéterminée ;
- si le nombre d'ordres de changement de profil d'abonnement reçus au cours de la durée prédéterminée est supérieur à un seuil prédéterminé, en déduire un fonctionnement suspect du terminal mobile de télécommunication et envoyer un message d'alerte à un utilisateur du terminal mobile de télécommunication, la durée prédéterminée et le seuil prédéterminé sont configurables par l'utilisateur.

2. Procédé de surveillance selon la revendication 1, dans lequel le message d'alerte est envoyé via une fenêtre intruse qui s'affiche sur un écran du terminal mobile de télécommunication.

3. Procédé de surveillance selon la revendication 1, dans lequel le message d'alerte requiert une confirmation de l'utilisateur avant d'exécuter un ordre de changement de profil d'abonnement suivant une détection du fonctionnement suspect.

4. Procédé de surveillance selon la revendication 1, comportant en outre l'étape de réinitialiser le compteur lorsque le message d'alerte a été envoyé.

5. Procédé de surveillance selon l'une des revendications précédentes, le procédé de surveillance étant piloté par le circuit intégré.

6. Procédé de surveillance selon la revendication 5, dans lequel le compteur est mis en œuvre dans le circuit intégré.

7. Procédé de surveillance selon la revendication 5, dans lequel la durée déterminée est mesurée grâce à un chronomètre mis en œuvre dans le terminal mobile de télécommunication et piloté par le circuit intégré grâce à un outil de type STK.

## Patentansprüche

1. Überwachungsverfahren zum Überwachen eines mobilen Telekommunikationsterminals, das mit einem integrierten Schaltkreis vom Typ eUICC-Karte oder eSIM-Karte versehen ist, wobei eine Vielzahl von Abonnementprofilen in dem integrierten Schaltkreis gespeichert ist, wobei das Überwachungsverfahren die Schritte umfasst:
- wenn ein erster Befehl zum Ändern eines Abonnementprofils nach der Initialisierung des integrierten Schaltkreises vom Typ eUICC-Karte oder eSIM-Karte empfangen wird, Starten eines Chronometers;
- Messen einer vorbestimmten Dauer mit dem Chronometer;
- Inkrementieren eines Zählers jedes Mal, wenn ein neuer Befehl zum Ändern eines Abonnementprofils empfangen wird;
- Bestimmen einer Anzahl von Befehlen zum Ändern eines Abonnementprofils, die während der vorbestimmten Dauer empfangen werden;
- wenn die Anzahl der während der vorbestimmten Dauer empfangenen Befehle zum Ändern eines Abonnementprofils größer als ein vorbestimmter Schwellenwert ist, daraus Herleiten eines verdächtigen Betriebs des mobilen Telekommunikationsterminals und Senden einer Warnmeldung an einen Nutzer des mobilen Telekommunikationsterminals, wobei die vorbestimmten Dauer und der vorbestimmte Schwellenwert durch den Nutzer konfigurierbar sind.

2. Überwachungsverfahren nach Anspruch 1, bei dem die Warnmeldung über ein Pop-up-Fenster gesendet wird, das auf einem Bildschirm des mobilen Telekommunikationsterminals angezeigt wird.

3. Überwachungsverfahren nach Anspruch 1, bei dem die Warnmeldung eine Bestätigung des Nutzers erfordert, ehe ein Befehl zum Ändern eines Abonnementprofils nach einer Detektion des verdächtigen Betriebs ausgeführt wird.

4. Überwachungsverfahren nach Anspruch 1, ferner umfassend den Schritt des Reinitialisierens des Zählers, wenn die Warnmeldung gesendet wurde.

5. Überwachungsverfahren nach einem der vorhergehenden Ansprüche, wobei das Überwachungsverfahren von dem integrierten Schaltkreis gesteuert wird.

6. Überwachungsverfahren nach Anspruch 5, bei dem der Zähler in dem integrierten Schaltkreis implementiert ist.

7. Überwachungsverfahren nach Anspruch 5, bei dem die bestimmte Dauer mit einem Chronometer gemessen wird, der in das mobile Telekommunikationsterminal implementiert ist und der von dem integrierten Schaltkreis dank eines Werkzeugs vom Typ STK gesteuert wird.

## Claims

1. A surveillance method for a mobile telecommunications terminal having an integrated circuit of the eUICC or eSIM card type, a plurality of subscription profiles being stored in the integrated circuit, and the surveillance method comprising the following steps:
- when a first order to change the subscription profile is received following the initialization of the card type integrated circuit eUICC or eSIM, start a timer;
- measure a predetermined time using the timer;
• incrementing a counter each time a new change of subscription profile order is received;
• determining a number of change of subscription profile orders received during the predetermined duration; and
• if the number of change of subscription profile orders received during the predetermined duration is greater than a predetermined threshold, deducing therefrom that operation of the mobile telecommunications terminal is suspect and sending a warning message to a user of the mobile telecommunications terminal, the predetermined duration and the predetermined threshold are configurable by the user.

2. A surveillance method according to claim 1, wherein the warning message is sent via a pop-up window that is displayed on a screen of the mobile telecommunications terminal.

3. A surveillance method according to claim 1, wherein the warning message requires confirmation from the user prior to executing a change of subscription profile order following detection of suspect operation.

4. A surveillance method according to claim 1, further comprising the step of reinitializing the counter when the warning message has been sent.

5. A surveillance method according to any preceding claim, wherein the surveillance method is controlled by the integrated circuit.

6. A surveillance method according to claim 5, wherein the counter is implemented in the integrated circuit.

7. A surveillance method according to claim 5, wherein the determined duration is measured by a timer implemented in the mobile telecommunications terminal and controlled by the integrated circuit by means of a tool of the SIM application toolkit (STK) type.
